(19) **Europäisches Patentamt**

**European Patent Office**

**Office européen des brevets**

(11) Veröffentlichungsnummer: **0 326 607 B1**

(12) **EUROPÄISCHE PATENTSCHRIFT**

(45) Veröffentlichungstag der Patentschrift:
02.10.91 Patentblatt 91/40

(51) Int. Cl.⁵: **F16H 25/20, B23Q 5/56,**
**G01N 1/06, B26D 7/26**

(21) Anmeldenummer: **88907306.0**

(22) Anmeldetag: **18.08.88**

(86) Internationale Anmeldenummer:
**PCT/EP88/00739**

(87) Internationale Veröffentlichungsnummer:
**WO 89/01579 23.02.89 Gazette 89/05**

(54) **SPIELFREIER ANTRIEB FÜR DEN ZUSTELLMECHANISMUS EINES MIKROTOMS.**

(30) Priorität: **21.08.87 DE 3727975**

(43) Veröffentlichungstag der Anmeldung:
**09.08.89 Patentblatt 89/32**

(45) Bekanntmachung des Hinweises auf die
Patenterteilung:
**02.10.91 Patentblatt 91/40**

(84) Benannte Vertragsstaaten:
**AT BE CH DE FR GB IT LI LU NL SE**

(56) Entgegenhaltungen:
**EP-A- 0 137 050**
**CH-A- 655 768**
**DE-C- 3 532 895**

(56) Entgegenhaltungen:
**DE-C- 3 539 138**
**FR-A- 2 394 724**
**US-A- 2 690 682**
**US-A- 2 919 596**
**US-A- 4 068 382**

(73) Patentinhaber: **Cambridge Instruments GmbH**
**Postfach 1120 Heidelberger Strasse 17-19**
**W-6907 Nussloch bei Heidelberg (DE)**

(72) Erfinder: **KEMPE, Manfred**
**Untere Eulenscheich 17**
**W-6903 Neckargmünd (DE)**

(74) Vertreter: **Diehl, Hermann Dr. et al**
**Diehl & Glaeser, Hiltl & Partner**
**Flüggenstrasse 13**
**W-8000 München 19 (DE)**

## Beschreibung

Die Erfindung betrifft einen spielfreien Antrieb für den Zustellmechanismus eines Mikrotoms.

Bei histologischen Untersuchungen ist die Schnittdickenkonstanz eine wesentliche Grundvoraussetzung. Diese soll sowohl bei häufigem Schneiden mit dem Mikrotom als auch nach längeren Stillstandzeiten vorhanden sein. Auch die Umgebungstemperatur darf die Schnittdickenkonstanz nicht beeinflussen. Die Konstruktion und Ausführung des auch als Mikrometerwerk bezeichneten Zustellmechanismus hat hierauf entscheidenden Einfluß.

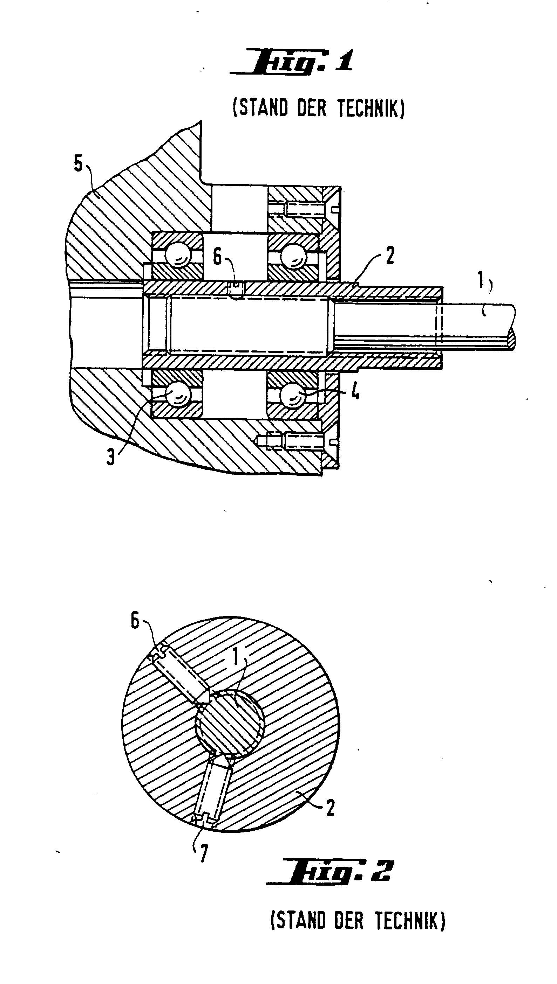

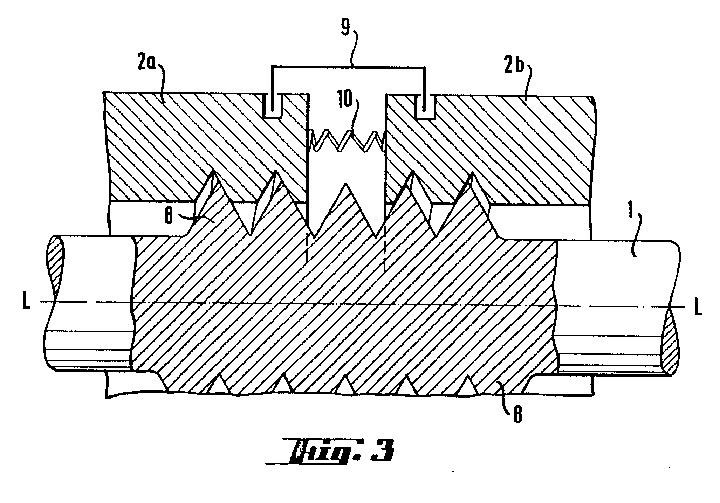

Ausgangspunkt der Weiterentwicklung ist der Gegenstand nach der DE-C-3539138, aus welcher ein spielfreier Antrieb für den Zustellmechanismus eines Mikrotoms mit Vorschubautomatik bekannt ist, welcher einer drehbar, axial unverschieblich gelagerten Gewindespindel, eine mit dieser zusammenwirkenden Spindelmutter, welche in getrieblicher Verbindung mit einem in Richtung auf ein Messer zustellbaren Probenhalter steht, eine erste Reibkupplung, die bis zum Überschreiten eines ersten bestimmten Drehmoments die Spindelmutter gegen ein Verdrehen gegenüber dem Probenhalter sichert, eine zweite Reibkupplung, welche die Gewindespindel gegen Verdrehen gegenüber einem Gestellfesten Teil des Mikrotoms bis zum Überschreiten eines zweiten bestimmten Drehmoments sichert, und Reibkupplungen enthält. Bei dieser Konstruktion kommt ein Schraubengetriebe zur Verwendung, das anhand der Figuren 1 und 2 näher dargestellt und erläutert ist. Zur Vermeidung des axialen Gewindespiels wurde bei dieser Anordnung eine Zweipunkt- oder Dreipunkt-Auflage, vorwiegend auf den Gewindespitzen, bewirkt. Jedoch bereits eine geringe Konizität des Spindelgewindes führt zur Aufhebung der Punktanlage mit der Folge, daß die Schrittweiten und damit die Schnittdickenkonstanz nicht mehr garantiert ist, und die erzeugten Schnitte einmal dicker und einmal dünner ausfallen.

Dieses vorbekannte Mikrotom hat insbesondere folgende Nachteile :

Der Antrieb kann in den Endlagen festfahren, was eine Beschädigung der Gewindespindel und Mutter zur Folge haben wird. Da die Gewindespindel nicht geführt wird, wirkt sich dies in der Ungenauigkeit in der Zustellung aus. Verschleiß zwischen Gewindespindel und Mutter kann nur durch Ausbau und Neueinstellung der kompletten Einheit eliminiert werden. Die ungünstige Lage der Rutschkupplungen auf kleinem Durchmesser führt zu großen Drehmomentstreuungen.

Der vorliegenden Erfindung liegt daher die Aufgabe zugrunde, einen spielfreien Antrieb für den Zustellmechanismus eines Mikrotoms zu schaffen, der selbstnachstellend wirkt und weitgehend wartungsfrei arbeitet.

Diese Aufgabe wird durch die Kombination der Merkmale nach dem Hauptanspruch gelöst ; zweckmäßige Weiterbildungen ergeben sich aus den abhängigen Ansprüchen.

Während bei dem vorbekannten Mikrotom nach der DE-C-3539138 zur Spielbeseitigung zwischen Mutter und Gewindespindel die Mutter in axialer Längsrichtung geschlitzt und mit einem Einstellring versehen ist, wird bei vorliegender Erfindung die zur Spielbeseitigung zwischen Mutter und Spindel bei Schraubengetrieben (US-A-2,919,596, US-A-2,490,682) bekannte Maßnahme genutzt, die Spindelmutter aus zwei drehfest, aber gegeneinander in axialer Richtung verschieblichen, federnd gegeneinander verspannten Teilmuttern auszubilden.

Nach dem erfindungsgemäßen Vorschlag entsteht ein Präzisionsschraubengetriebe mit Selbsteinstellung des Axialspiels bei Verschleiß der Gewindeflanken, das reproduzierbare Schrittbewegungen im Bereich eines µm-Vorschubs von einer Objekthalterung zu einem Messer gewährleistet und größere Fertigungstoleranzen erlaubt.

Eine kraftschlüssige Feder-Scheibenkupplung schützt das Mikrometerwerk vor überhöhten Antriebsmomenten, wobei die erste Reibkupplung vorzugsweise von einer Wellenfeder gebildet ist, die an einer Schulter der Teilmutter anliegt, wobei sich die Wellenfeder an dem Außenring eines der beiden Kugellager abstützt. Wenn an der drehbar am Probenhalter gelagerten Teilmutter eine an sich bekannte Vorschubautomatik angreift, welche die Teilmutter entgegen dem Widerstand der ersten Reibkupplung dreht, während die Gewindespindel unter dem Einfluß der zweiten Reibkupplung stehen bleibt, und wenn die Gewindespindel selbst getrieblich mit einem zweiten, vorzugsweise dem Schnellvortrieb dienenden Vorschubantrieb, zweckmäßigerweise dem Handantrieb, verbunden ist, lassen sich in unproblematischer Weise ein Schnellvorschub und eine automatische Schrittbewegung erzielen, bei gleichzeitiger Vermeidung der vorgenannten überhöhten Antriebsmomente.

Gemäß einer besonders zweckmäßigen Ausgestaltung ist beiderseits zu dem Gewinde der mit dem Probenhalter getrieblich verbundenen Teilmuttern je ein Gleitlager vorgesehen, wie es an sich beispielsweise aus der EP-A-0137050 bekannt ist. Dies ergibt eine stabilisierte Positionierungsgenauigkeit bei Radial-Axial-Belastungen, sowohl für Grob- und Feineinstellung, ohne daß eine Konizität des Spindelgewindes stört. Das Gleitlagerpaar besteht zweckmäßigerweise aus einem zylindrischen Umfangsstück der Gewindespindel und einer damit zusammenwirkenden zylindrischen Innenwand der Teilmutter.

Um Beschädigungen des Mikrometerwerks zu verhindern, müssen in den Endlagern, welche den Vorschub begrenzen, größere Verspannungen vermieden werden, und es darf zum Lösen der Gewindespindel aus den

2

Endlagen kein großer Kraftaufwand notwendig sein. Die Erfindung erreicht dies durch eine Endlagenbegrenzung der Axialbewegung durch zumindest einen in einem Endbereich des Spindelmuttervorschubs in Spindelumfangrichtung wirkenden Anschlag. Dieser ist zweckmäßigerweise derart ausgebildet, daß zumindest eine der Teilmuttern an ihrer, von der anderen Teilmutter abgewandten Stirnseite ein erstes Anschlagelement enthält, welches nach einer vorbestimmten Anzahl von Spindelumdrehungen mit einem zweiten, an der Gewindespindel selbst angebrachten Anschlagelement in Eingriff tritt. Hierdurch wird die Gewindegeometrie vor Verformungen geschützt.

Als günstig hat es sich ferner erwiesen, wenn die Gewindespindel gegenüber einem gestellfesten Teil des Mikrotoms durch zumindest ein in axialer Richtung wirkendes Nadellager in axialer Richtung festgelegt ist, wobei zur spielfreien axialen Lagerung der Gewindespindel bevorzugt zwei Nadellager verwendet sind.

Die beiliegenden Zeichnungen dienen der weiteren Erläuterung der Erfindung.

Fig. 1    zeigt einen Längsschnitt von einem Zustellmechanismus eines Mikrotoms gemäß dem Stand der Technik, bei welchem der horizontale Vorschub für die Zustellbewegung zwischen Messer und Objekt mittels eines Schraubengetriebes erfolgt, bei dem die Gewindespindel und die Spindelmutter durch eine Radialverspannung annähernd spielfrei gepaart sind.

Fig. 2    zeigt einen Querschnitt durch das Schraubengetriebe des in Fig. 1 gezeigten Zustellmechanismus nach dem Stand der Technik, bei dem ein Restbetrag des axialen Gewindespiels durch radial angeordnete Funktionselemente kompensiert wird.

Fig. 3    zeigt im Längsschnitt und in schematisch vereinfachter Darstellung ein Ausführungsbeispiel von einem Schraubengetriebe, das bei dem erfindungsgemäßen Zustellmechanismus zur Anwendung kommt.

Fig. 4    zeigt einen Längsschnitt durch den erfindungsgemäßen Zustellmechanismus, wobei zum Verständnis nicht notwendige Teile weggelassen sind.

Bei dem in den Fig. 1 und 2 dargestellten Zustellmechanismus gemäß dem Stand der Technik ist eine Gewindespindel 1 vorgesehen, auf welcher eine Spindelmutter 2 gegenüber dieser verschraubbar angeordnet ist. Die Spindelmutter 2 ist mittels zweier Kugellager 3, 4 an einem Probenhalter 5, der lediglich teilweise dargestellt ist, derart befestigt, daß der Probenhalter durch ein Verschrauben der Spindelmutter 2 in axialer Richtung verschoben, jedoch nicht mitgedreht wird.

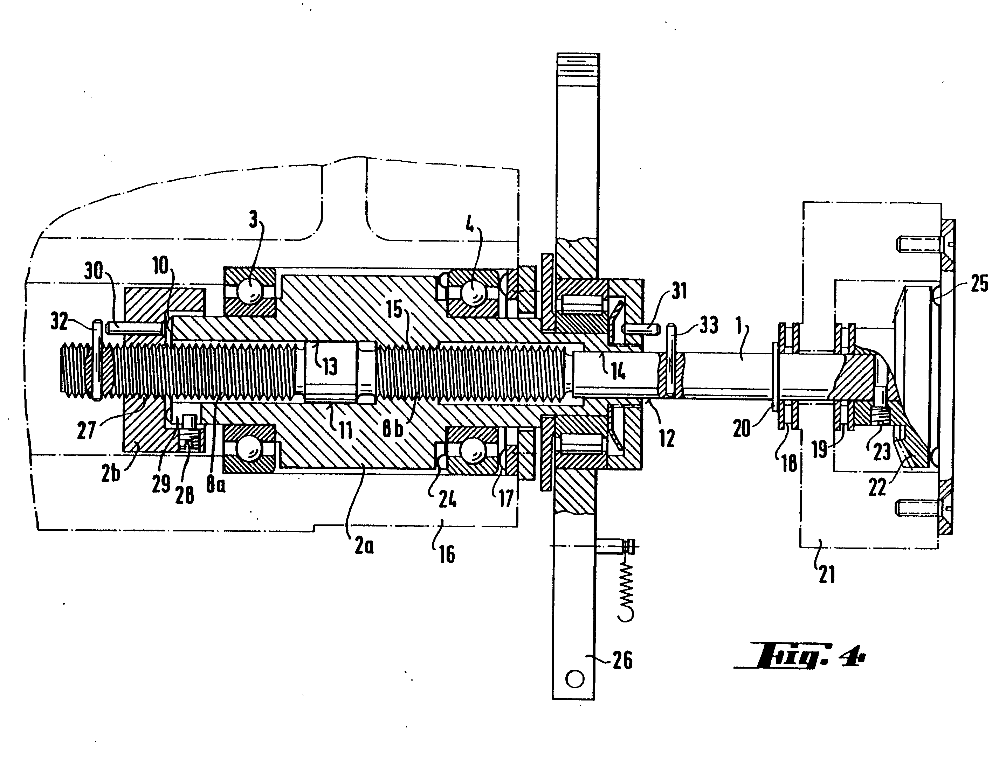

Zur Vermeidung des Restbetrags eines axialen Gewindespiels, das in der Größenordnung von 3 μm bis 7 μm liegt, sind radial angeordnete Funktionselemente vorgesehen, im dargestellten Beispiel Gewindestifte 6 und 7, wodurch eine Zweipunkt- oder Dreipunkt-Auflage vorwiegend auf den Gewindespitzen erzielt wird. Bereits eine geringe Konizität des Spindelgetriebes würde zum Aufheben der Punktanlage der radialen Funktionselemente führen mit der Folge, daß die Schrittkonstanz im Vorschub nicht garantiert und ein Dick-Dünn-Effekt bezüglich des Schnitts entstehen würde, der beim Betrieb des Mikrotoms äußerst ungelegen wäre. Mit der in den Fig. 3 und 4 dargestellten erfindungsgemäßen Konstruktion eines Zustellmechanismus für ein Mikrotom wird ein spielfreier Antrieb geschaffen. Wesentliche Merkmale für das Grundprinzip dieses Zustellmechanismus, der auch als Mikrometerwerk bezeichnet wird, sind aus der schematischen Darstellung von Fig. 3 ersichtlich. Man erkennt in der teilgebrochenen schematisierten Längsschnittdarstellung die Gewindespindel 1, die in einem Längsbereich mit einem Spindelgewinde 8 versehen ist, welches eine Zahnung aufweist, die bezogen auf eine durch die Zahnspitze verlaufende, die Axialrichtung L-L senkrecht durchsetzende, d.h. radial verlaufende Ebene, symmetrisch sind. Im Eingriff mit dem Spindelgewinde stehen eine Teilmutter 2a und eine als Kontermutter ausgebildete Teilmutter 2b mit ihren entsprechenden Gewindegängen. Die Teilmuttern 2a und 2b sind, wie durch das Bezugszeichen 9 angedeutet werden soll, drehfest miteinander verbunden, aber in axialer Richtung gegeneinander verschiebbar. Die Teilmuttern 2a und 2b sind mittels einer Federeinrichtung 10 gegeneinander verspannt, so daß sichergestellt ist, daß die Teilmutter 2a mit ihrem Gewindegang jeweils an der aus der Sicht von Fig. 3 rechten Zahnflanke des Spindelgewindes anliegt, während die Teilmutter 2b mit ihrem Gewinde jeweils aus der Sicht von Fig. 3 linken Zahnflanke des Spindelgewindes anliegt oder umgekehrt, je nachdem, ob die Federeinrichtung 10, wie im dargestellten Falle als Druck- bzw. in dem anderen erwähnten Fall als Zugfeder wirkt.

Durch die vorbeschriebene Anordnung wird eine Axialverspannung zwischen Gewindespindel 1 und Spindelmutter 2 erzielt, wobei die nicht mit dem Probenhalter verbundene Teilmutter 2a bzw. 2b als angefederte, schwimmend gelagerte Kontermutter wirkt, die den Ausgleich des axialen Gewindespiels herstellt.

Bei der in Fig. 4 dargestellten konkreten Ausführungsform des Zustellmechanismus ist dieses Prinzip der Axialverspannung ebenfalls verwirklicht. Die Gewindespindel 1 ist in Teilbereichen mit einem Spindelgewinde 8a bzw. 8b versehen. Sie enthält daneben zwei Präzisionszylinderflächen 11 und 12, von denen die mit dem Bezugszeichen 11 versehene zwischen den Spindelgewindeteilen 8a und 8b, und die mit dem Bezugszeichen 12 versehene an dem dem Feststellmechanismus zugekehrten Ende der Spindel 1 angebracht sind. Die Präzisionszylinderführung 11 hat einen größeren Durchmesser als das Spindelgewinde, während die Präzisionszylinderführung 12 einen kleineren Durchmesser als dasselbe aufweist, was dazu dient, um den Zusammenbau der Teile zu vereinfachen.

Die Präzisionszylinderführung 11 und 12 wirkt mit entsprechenden Präzisionszylinderbuchsen 13, 14 zusammen, die im Inneren der Teilmutter 2a angebracht sind und bewirken, daß dem Gewindeaußendurchmesser des Spindelgewindes 8b eine Zentrierfunktion zugeordnet ist, so daß eine etwaige Konizität über die Länge dieses Gewindebereichs 8a keinen Einfluß auf die Schnittdickenkonstanz hat. Der Gewindebereich 8b der Gewindespindel 1 steht im Eingriff mit dem Innengewinde 15 der Teilmutter 2a, so daß bei einem Verdrehen der Gewindespindel 1 die über die Rillenkugellager 3 und 4 radial gelagerte Teilmutter 2a den Schlitten 16 verschiebt, der den Probenhalter bildet oder trägt. Eine Wellenfeder 17 verspannt die beiden Rillenkugellager 3 und 4 in axialer Richtung derart, daß eine definierte Radialdrehbewegung der Teilmutter 2a auf der Gewindespindel 1 ohne Axialverschiebung gegenüber dem beweglichen Schlitten 16, der die Zustellung vom Objekt zum Messer überträgt, stattfindet. Die Rillenkugellager 3 und 4 stützen sich axial über die Spindel 1 auf zwei Nadellagern 18, 19 ab, um axiale Lastwechsel aufzunehmen, wobei die Axialnadellager 18, 19 bewirken, daß das Umkehrspiel aufgehoben wird.

Das Nadellager 18 wird dabei von einem Bund 20 der Gewindespindel 1 oder einen in eine entsprechende Nut desselben eingesetzten Sprengring gegen ein gestellfestes Teil des Mikrotoms anliegend gehalten. Entsprechendes gilt für das Nadellager 19, wobei hier dessen Anlage an einem gestellfesten Teil, welches in Fig. 4 durch das Bezugszeichen 21 angedeutet ist, mittels des auf das Ende der Gewindespindel 1 aufgesteckten Antriebsritzels 22 für den manuellen Schnellvortrieb erfolgt oder mittels einer zwischen diese geschalteten Kontermutter, die jedoch in den Zeichnungen nicht dargestellt ist. Das Antriebsritzel wird über einen Stift 23 bzw. über eine Stellschraube drehfest auf der Gewindespindel 1 gehalten.

Der Wellenfeder 17 kommt zusätzlich die Funktion eines Gegenlagers zu, wobei ihre Federkraft derart gewählt ist, daß diese im Schneideprozeß eine Vorwärtsbewegung des Schlittens 16, verbunden mit einem Hineinziehen des Objekts in das Messer, verhindert. Eine weitere Wellenfeder 24, welche der Wellenfeder 17 entgegenwirkt, stützt sich zum einen an einer Schulter der Teilmutter 2a ab, zum anderen an dem Außenring des Kugellagers 4. Hierdurch entsteht eine erste Reibkupplung, welche verhindert, daß sich bei einer Drehung der Gewindespindel 1 über das Antriebsritzel die Teilmutter 2a mit der Gewindespindel 1 mitdreht und damit eine Verschiebung der Teilmutter 2a sowie des Probenhalters in Axialrichtung verhindert.

An der Stirnseite des Antriebsritzels 22 liegt eine Reibscheibe 25 an, welche als zweite Reibkupplung dient. Die Reibscheibe 25 verhindert ein unerwünschtes Mitdrehen der Gewindespindel 1 während des Schaltzustands "Automatikvorschub" des Mikrotoms, der in an sich bekannter Weise von einer mit einer Ratschenschaltung ausgestatteten Vorschubautomatik 26 bewirkt wird, die direkt an der Teilmutter 2a angreift und diese in Abhängigkeit von dem gewünschten Vorschub bei dem jeweiligen folgenden Schnitt um einen bestimmten Betrag weiterdreht.

Aus der Sicht von Fig. 4 ist links von der Teilmutter 2a und im Abstand von dieser die Teilmutter 2b auf den Spindelgewindebereich 8a aufgeschraubt, was mittels eines Innengewindes 27 der Teilmutter 2b erfolgt. Die Teilmutter 2b ist in ihrem, einen Endbereich mit verringertem Außendurchmesser versehenen Endbereich der Teilmutter 2a überlappenden, nach innen gerichteten Ende mit einem Gewindestift 28 versehen, der in einem in axialer Richtung der Gewindespindel 1 verlaufenden Längsschnitts 29 an der Außenseite der Teilmutter 2a eingreift, wobei die Breite des Längsschlitzes 29 und des in diesen hineinragenden Endes des Gewindestiftes 28 derart bemessen sind, daß der Gewindestift formschlüssig in dem Längsschlitz 29 liegt und längs diesem verschiebbar ist. Auf diese Weise wird synchroner Lauf zwischen den Teilmuttern 2a und 2b hergestellt.

Zwischen der nach außen weisenden Stirnfläche der Teilmutter 2a und der nach innen weisenden Stirnfläche der Teilmutter 2b ist als Federelement 10 eine Blattfeder in Form einer Wellenfeder oder Schrauben-Druckfeder angebracht, welche die Teilmuttern 2a/ und 2b in der in Fig. 3 näher erläuterten Weise gegeneinander verspannt.

Die vorbeschriebene Ausgestaltung liefert ein Präzisionsschraubengetriebe, das bezüglich des Axialspiels eine Selbstein- bzw. nachstellung bewirkt und bei Verschleißerscheinungen der Gewindeflanken für reproduzierbare Schrittbewegungen im μm-Bereich zwischen dem nicht dargestellten Messer und der Objekthalterung sorgt. Durch den Synchronlauf der beiden Teilmuttern 2a und 2b läßt sich die gesamte Länge der Gewindespindel ausnutzen. Daneben können größere Fertigungstoleranzen bezüglich des Spindelgewindes und des Gewindes der Spindelmutter zugelassen werden, was die Herstellung des gesamten Zustellmechanismus kostengünstiger ermöglicht.

An den voneinander abgekehrten Stirnflächen der Teilmuttern 2a und 2b sind des weiteren vorstehende Anschlagelemente angebracht, die bei dem in Fig. 4 dargestellten Beispiel von Stiften 30 bzw. 31 gebildet sind. Die Anschlagelemente wirken mit Anschlagelementen 32 und 33 zusammen, welche auf der Gewindespindel

4

am vorderen bzw. rückwärtigen Bereich angebracht sind, und von die Gewindespindel 1 durchsetzenden und über deren Umfang vorstehenden Stiften gebildet sind. Nach einer vorbestimmten Anzahl von Spindelumdrehungen in "Vorwärts-Richtung" kommen die Anschlagelemente 30 und 32 in Umfangsrichtung aneinander zum Anschlag. Die maximale zurückgezogene Stellung der Teilmuttern 2a und 2b wird dagegen durch die Anschlagelemente 31 und 33 begrenzt, welche ebenfalls in Umfangsrichtung aneinanderanzuliegen kommen. Sobald dieses geschehen ist, erfolgt eine Verriegelung zwischen der Gewindespindel und der Spindelmutter 2, so daß bei weiteren Rotationsbewegungen durch ein antreibendes Moment die Spindelmutter mit der Gewindespindel 1 synchron umläuft, wodurch ein Festziehen der Spindelmutter 2 gegen die Gewindespindel 1 oder ein Gehäuseteil nicht möglich ist. Hierdurch werden sowohl eine Verformung der Gewindeflanken als auch eine Dehnung des Gewindeschafts verhindert. Dies bewirkt, daß die Steigung des Gewindes über die gesamte Gewindelänge konstant bleibt, was für eine exakte Zustellung von größter Bedeutung ist.

Zusammenfassend läßt sich feststellen, daß durch den vorbeschriebenen Antrieb für den Zustellmechanismus eine erhöhte Präzision bei gleichzeitig geringertem Fertigungs-, Montage- und Serviceaufwand erreicht wird.

## Patentansprüche

1. Spielfreier Antrieb für den Zustellmechanismus eines Mikrotoms mit Vorschubautomatik (26), enthaltend eine drehbar, axial unverschieblich gelagerte Gewindespindel (1, 8, 8a/8b), eine mit dieser zusammenwirkende Spindelmutter (2), welche in getrieblicher Verbindung mit einem in Richtung auf ein Messer zustellbaren Probenhalter (16) steht,
eine erste Reibkupplung (24), die bis zum Überschreiten eines ersten bestimmten Drehmoments die Spindelmutter (2) gegen ein Verdrehen gegenüber dem Probenhalter (16) sichert,
eine zweite Reibkupplung (25), welche die Gewindespindel gegen Verdrehen gegenüber einem gestellfesten Teil (21) des Mikrotoms bis zum Verschreiten eines zweiten bestimmten Drehmoments sichert, **dadurch gekennzeichnet, daß**
die Spindelmutter aus zwei drehfest, aber gegeneinander in axialer Richtung verschieblichen Teilmuttern (2a, 2b) besteht, die in axialer Richtung federnd gegeneinander verspannt und mittels eines in einer (2b) derselben befestigten, in eine Nut (29) der anderen (2a) eingreifenden Stifts (28) in Drehrichtung miteinander verbunden sind, wobei eine Teilmutter (2a) mittels zweier durch eine Druckfeder (17) gegeneinander verspannter Kugellager (3, 4) drehbar mit dem Probenhalter (16) verbunden ist,
die mittels der Kugellager (3, 4) am Probenhalter (16) gelagerte Teilmutter (2a) über die erste Reibkupplung (24) gesichert ist, und
beidseitig zu dem Gewinde (15) der mit dem Probenhalter (16) getrieblich verbundenen Teilmutter (2a) je ein Gleitlager (11, 13 ; 12, 14) vorgesehen ist.

2. Antrieb nach Anspruch 1, dadurch gekennzeichnet, daß die federnde Verspannung der Teilmuttern (2a, 2b) mittels einer Druckfeder (10), insbesondere mittels einer Blatt-bzw. Wellenfeder oder zumindest einer Schraubendruckfeder, erfolgt.

3. Antrieb nach Anspruch 1 oder 2, gekennzeichnet durch zumindest ein Gleitlager (11, 13 ; 12, 14) zwischen der Gewindespindel (1) und der mit dem Probenhalter (16) getrieblich verbundenen Teilmutter (2a).

4. Antrieb nach Anspruch 3, dadurch gekennzeichnet, daß das Gleitlager (11, 13) benachbart zu dem Gewinde (15) der mit dem Probenhalter (16) getrieblich verbundenen Teilmutter (2a) angebracht ist.

5. Antrieb nach Anspruch 4, dadurch gekennzeichnet, daß zumindest ein in einem Endbereich des Spindelmuttervorschubs in Spindelumlaufrichtung wirkender Anschlag (30, 32 ; 31, 33) vorgesehen ist.

6. Antrieb nach einem der Ansprüche 3 bis 5, dadurch gekennzeichnet, daß das Gleitlager von einem zylindrischen Umfangsstück (11, 12) der Gewindespindel und einer zylindrischen Innenwand (13, 14) der Teilmutter (2a) gebildet ist.

7. Antrieb nach Anspruch 1, dadurch gekennzeichnet, daß zumindest eine der Teilmuttern (2a, 2b) an ihrem von der anderen Teilmutter (2a, 2b) abgewandten Stirnseite ein erstes Anschlagelement (30, 31) enthält, welches nach einer vorbestimmten Anzahl von Spindelumdrehungen mit einem Anschlagelement (32, 33) in Eingriff tritt.

8. Antrieb nach Anspruch 1, dadurch gekennzeichnet, daß die erste Reibkupplung von einer Wellenfeder (24) gebildet ist, die an einer Schulter der Teilmutter (2a) anliegt, wobei sich die Wellenfeder (24) an dem Außenring eines der beiden Kugellager (4) abstützt.

9. Antrieb nach einem der Ansprüche 1 bis 8, dadurch gekennzeichnet, daß an der drehbar im Probenhalter (16) gelagerten Teilmutter (2a) eine an sich bekannte Vorschubautomatik (26) angreift, welche die Teilmutter (2a) entgegen dem Widerstand der ersten Reibkupplung dreht, während die Gewindespindel (1) unter dem Einfluß der zweiten Reibkupplung (25) stehen bleibt, und daß die Gewindespindel (1) getrieblich mit einem zweiten, vorzugsweise dem Schnellvortrieb dienenden Vorschubantrieb (23) getrieblich verbunden ist.

10. Antrieb nach einem der vorstehenden Ansprüche, dadurch gekennzeichnet, daß die Gewindespindel (1) gegenüber einem gestellfesten Teil (21) des Mikrotoms durch mindestens ein in axialer Richtung wirkendes Nadellager (18, 19) in axialer Richtung festgelegt ist.

11. Antrieb nach Anspruch 10, dadurch gekennzeichnet, daß zur spielfreien axialen Lagerung der Gewindespindel (1) zwei Nadellager (18, 19) verwendet sind.

## Claims

1. Backlash-free drive for the infeed mechanism of a microtome with an automatic feed device (26), comprising
a threaded spindle (1, 8, 8a/8b) which is mounted so as to be rotatable but axially non-shiftable,
a spindle nut (2) in cooperation with said spindle, said spindle nut being connected via a gear to a specimen holder (16) which can be infed in the direction of a blade,
a first frictional clutch (24) which secures the spindle nut (2) against twisting relative to the specimen holder (16) until a first given torque has been exceeded,
a second frictional clutch (25) which secures the threaded spindle against twisting relative to a stationary part (21) of the microtome until a second given torque has been exceeded, **characterized in that**
the spindle nut consists of two non-rotatable nut elements (2a, 2b) which can be shifted relative to one another in an axial direction, said nut elements being spring-loaded against one another in an axial direction and being connected to one another in the direction of rotation by means of a pin (28) which is attached to one (2b) of the nut elements and engages in a groove (29) of the other (2a), one nut element (2a) being rotatably connected to the specimen holder (16) by means of two ball bearings (3, 4) which are spring-loaded against one another with a compression spring (17),
the nut element (2a) connected to the specimer holder (16) by means of the ball bearings (3, 4) are secured via the first frictional clutch (24), and a plain bearing (11, 13 ; 12, 14) is provided on each side of the thread (15) of the nut element (2a) connected via a gear to the specimen holder (16).

2. Drive according to claim 1, characterized in that the spring loading of the nut elements (2a, 2b) is effected by means of a compression spring (10), in particular by means of a leaf or sinuous spring or at least a helical compression spring.

3. Drive according to claim 1 or 2, characterized by at least one plain bearing (11, 13 ; 12, 14) between the threaded spindle (1) and nut element (2a) which is connected via a gear to the specimen holder (16)..

4. Drive according to claim 3, characterized in that the plain bearing (11, 13) is located adjacent to the thread (15) of the nut element (2a) connected via a gear to specimen holder (16).

5. Drive according to claim 4, characterized in that there is provided at least one fence (30, 32 ; 31, 33) acting in an end area of the spindle nut feed in the direction of spindle rotation.

6. Drive according to any one of claims 3 to 5, characterized in that the plain bearing is formed of a cylindrical peripheral piece (11, 12) of the threaded spindle and a cylindrical inner wall (13, 14) of nut element (2a).

7. Drive according to claim 1, characterized in that at least one of the nut elements (2a, 2b) contains a first fence element (30, 31) on its front end disposed away from the other nut element (2a, 2b), said fence element engaging after a predetermined number of spindle rotations with a fence element (32, 33).

8. Drive according to claim 1, characterized in that the first frictional clutch is a sinuous spring (24) resting against a shoulder of nut element (2a), said sinuous spring (24) being supported on the outer race of one of the two ball bearings (4).

9. Drive according to any one of claims 1 to 8, characterized in that a prior art automatic feed device (26) ats upon nut element (2a) which is rotatably mounted in specimen holder (16), said automatic feed device turning the nut element (2a) against the resistance of the first frictional clutch while threaded spindle (1) remains stationary under the action of the second frictional clutch (25), and in that threaded spindle (1) is connected via a gear to a second teed drive (23) which is preferably used for rapid feed.

10. Drive according to any one of the preceding claims, characterized in that the threaded spindle (1) is held in an axial direction relative to a stationary part (21) of the microtome by at least one needle roller bearing (18, 19) acting in an axial direction.

11. Drive according to claim 10, characterized in that two needle roller bearings (18, 19) are used to ensure a backlash-free axial mounting of the threaded spindle (1).

6

**Revendications**

1. Mécanisme d'entraînement sans jeu pour le mécanisme d'approche d'un microtome avec dispositif automatique d'avance (26), comportant
une broche filetée (1, 8, 8a/8b) montée tournante, non déplaçable axialement, un écrou de broche (2), coopérant avec celle-ci, qui est en liaison d'entraînement avec un support d'échantillons (16) à déplacer en direction d'une lame,
un premier accouplement à friction (24) qui empêche l'écrou de broche (2) de tourner par rapport au support d'échantillons (16), jusqu'à ce qu'un premier couple de rotation déterminé soit dépassé,
un deuxième accouplement à friction (25) qui empêche la broche filetée de tourner par rapport à une partie (21) du microtome, solidaire du bâti, jusqu'à ce qu'un deuxième couple de rotation déterminé soit dépassé, caractérisé en ce que
l'écrou de broche est constitué de deux parties d'écrou (2a, 2b), fixes en rotation mais déplaçables axialement l'une par rapport à l'autre, qui sont serrées axialement l'une contre l'autre, de manière élastique et reliées entre elles dans le sens de rotation, au moyen d'une goupille (28) fixée dans une partie d'écrou (2b), s'engageant dans une rainure (29) de l'autre partie d'écrou (2a), une partie d'écrou (2a) étant reliée au support d'échantillons (16), de façon à pouvoir tourner, au moyen de deux roulements à billes (3, 4), serrés l'un contre l'autre par un ressort de pression (17),
la partie d'écrou (2a) montée sur le support d'échantillons (16), au moyen des roulements à billes (3, 4), est bloquée par l'intermédiaire du premier accouplement à friction (24) et
il est prévu un palier à glissement (11, 13 ; 12, 14) de part et d'autre de la partie filetée (15) de la partie d'écrou (2a) reliée en entraînement au support d'échantillons (16).

2. Mécanisme d'entraînement selon la revendication 1, caractérisé en ce que le serrage élastique des parties d'écrou (2a, 2b) s'effectue au moyen d'un ressort de pression (10), notamment au moyen d'un ressort à lame ou d'un ressort zigzag ou au moins d'un ressort de pression hélicoïdal.

3. Mécanisme d'entraînement selon la revendication 1 ou 2, caractérisé par au moins un palier de glissement (11, 13 ; 12, 14) entre la broche filetée (1) et la partie d'écrou (2a) reliée en entraînement au support d'échantillons (16).

4. Mécanisme d'entraînement selon la revendication 3, caractérisé en ce que le palier de glissement (11, 13) est placé à proximité de la partie filetée (15) de la partie d'écrou (2a) reliée en entraînement au support d'échantillons (16).

5. Mécanisme d'entraînement selon la revendication 4, caractérisé en ce qu'il est prévu au moins une butée (30, 32 ; 31, 33) agissant dans le sens de rotation de la broche, dans une zone terminale de l'avance d'écrou de broche.

6. Mécanisme d'entraînement selon l'une des revendications 3 à 5, caractérisé en ce que le palier de glissement est formé par une pièce périphérique (11, 12) cylindrique de la broche filetée et par une paroi intérieure (13, 14) cylindrique de la partie d'écrou (2a).

7. Mécanisme d'entraînement selon la revendication 1, caractérisé en ce que l'une au moins des parties d'écrou (2a, 2b) contient, sur son côté frontal éloigné de l'autre partie d'écrou (2a, 2b), un premier élément de butée (30, 31) qui vient en prise avec un élément de butée (32, 33), après un nombre déterminé de tours de broche.

8. Mécanisme d'entraînement selon la revendication 1, caractérisé en ce que le premier accouplement à friction est formé par un ressort zigzag (24) qui s'applique contre un épaulement de la partie d'écrou (2a), le ressort zigzag (24) prenant appui contre la bague extérieure de l'un des deux roulements à billes (4).

9. Mécanisme d'entraînement selon l'une des revendications 1 à 8, caractérisé en ce que sur la partie d'écrou (2a) montée tournante dans le support d'échantillons (16), agit un dispositif automatique d'avance (26), connu en soi, qui fait tourner la partie d'écrou (2a) à l'encontre de la résistance du premier accouplement à friction, tandis que la broche filetée (1) reste sous l'influence du deuxième accouplement à friction (25) et en ce que la broche filetée (1) est reliée en entraînement avec un deuxième mécanisme d'avance (23), servant de préférence à l'avance rapide.

10. Mécanisme d'entraînement selon l'une des revendications précédentes, caractérisé en ce que la broche filetée (1) est fixée axialement par rapport à une partie (21), solidaire du bâti, du microtome, par au moins un roulement à aiguilles (18, 19) agissant axialement.

11. Mécanisme d'entraînement selon la revendication 10, caractérisé en ce qu'on utilise deux roulements à aiguilles (18, 19) pour supporter axialement sans jeu la broche filetée (1).

## Fig. 1

(STAND DER TECHNIK)

## Fig. 2

(STAND DER TECHNIK)

EP 0 326 607 B1

Fig. 3

Fig. 4

EP 0 326 607 B1